# EUROPEAN PATENT SPECIFICATION

(11) **EP 1 793 556 B1**
(45) Date of publication and mention of the grant of the patent: **27.04.2011**
(21) Application number: 06256021.4
(22) Date of filing: 24.11.2006
(51) Int. Cl.: H04L 29/06, G06F 21/00

(54) **Content transmission and reception method, and content reproducing terminal**
Verfahren für Inhaltsübertragung und Inhaltsempfang, und Inhaltswiedergabevorrichtung
Méthode de transmission et de réception de contenu et dispositif de reproduction de contenu

(30) Priority: 02.12.2005 JP 2005349540; 16.10.2006 JP 2006281239
(43) Date of publication of application: 06.06.2007
(73) Proprietor: Sony Corporation, Tokyo 141-0001 (JP)
(72) Inventor: Takai, Motoyuki, Shinagawa-ku Tokyo (JP); Nakamura, Takatoshi, Shinagawa-ku Tokyo (JP); Asukai, Masamichi, Shinagawa-ku Tokyo (JP); Takehara, Mitsuru, Shinagawa-ku Tokyo (JP); Sako, Yoichiro, Shinagawa-ku Tokyo (JP); Terauchi, Toshiro, Shinagawa-ku Tokyo (JP); Inoue, Makoto, Shinagawa-ku Tokyo (JP); Shirai, Katsuya, Shinagawa-ku Tokyo (JP); Sasaki, Toru, Shinagawa-ku Tokyo (JP); Sakai, Yuichi, Shinagawa-ku Tokyo (JP); Matsuda, Masafumi, Shinagawa-ku Tokyo (JP)
(74) Representative: Nicholls, Michael John

(56) References cited:
- EP-A- 1 398 968
- WO-A-2004/030311
- WO-A-2005/057846
- WO-A2-02/062054
- MICROSOFT CORPORATION: "A Technical Overview of Windows Media DRM 10 for Devices passage" TECHNICAL OVERVIEW OF WINDOWS MEDIA DRM 10 FOR DEVICES, MICROSOFT,, US, September 2004 (2004-09), pages 1-15, XP002371223

## Description

### CROSS REFERENCES TO RELATED APPLICATIONS

The present invention contains subject matter related to Japanese Patent Application JP 2007181175.

### BACKGROUND OF THE INVENTION

### 1. Field of the Invention

The present invention relates to a method of transmitting a content such as music, video, game, etc., from a transmitter side, and reproducing the content on a receiver side, and a content receiving and reproducing terminal using the method.

### 2. Description of the Related Art

Users may enjoy reproducing purchased contents such as music, video, games, etc. Users typically refer to friend's recommendation, or advertisements of content distribution sources to decide whether to purchase contents. When the user decides to purchase a content, he or she may purchase a compact disk (CD) or a digital versatile disk (DVD) or content data via the Internet or a cellular phone communication network.

A variety of methods have been proposed to provide recommendations of music or the like. Japanese Unexamined Patent Application Publication No. 2004-54023 discloses one method, in which each user holds a list of recommendable songs on his mobile terminal, and exchanges recommendable song lists with friends.

Japanese Unexamined Patent Application Publication No. 2002-312606 discloses another method in which a user reproducing audition music from audition data in a music shop, and when the user requests the audition data after audition, the audition data is transmitted to a mobile terminal of the user from a transmitter in the music shop for downloading.

Microsoft Corporation: "A Technical Overview of Windows Media DRM 10 for Devices passage" Technical Overview of Windows Media DRM 10 for devices, Microsoft, US, September 2004 (2004-09), pages 1-15, XP002371223 discloses a system for network devices which-allows devices to render protected content over a network from a personal computer. A protocol is described which specifies the interaction between the computer, which holds the protected content and licenses, and the remote network device, which requests permission to play the content. Examples of network devices include set-top boxes, DVD players, digital media receivers, and digital audio receivers. Network devices are required by license agreement not to allow any kind of permanent content storage; the rendering device cannot save or use the content except for one-time playback.

WO 2004/030311 A discloses a system and method for verifying the proximity of a node on a network in order to enhance network security. In particular, different rights or restrictions are imposed on the distribution of material to nodes, based on whether the node is "local" or "remote". The proximity of a target node to a source node is determined from the communication delay associated with a "challenge-response protocol".

WO 02/062054 A2 discloses an arrangement in which a free preview of a program can be provided to client computers in a multicasting system. This can allow viewers in the multicasting system to view a first portion of the program before deciding whether to order the program content. Various distribution methods can be accomplished using encryption keys to distribute program content. An initial viewing period can be provided to allow negotiation of the encryption keys.

WO 2005/057846 A1 discloses methods and devices for allowing secure sharing of DRM-protected content. A content holder may share the content under certain restrictions. These restrictions include range-based, time-based or usage-based limitations. For example, a user may share content stored on a first mobile electronic terminal device with listeners owning second mobile electronic terminal devices by means of a wireless connection with those devices while they are located within a certain distance of the first mobile electronic terminal device.

### SUMMARY OF THE INVENTION

A user has typically difficulty of deciding whether to purchase a content even if a song is recommended by another user in accordance with the method disclosed in Japanese Unexamined Patent Application Publication No. 2004-54023. Before actually listening to the song, the user cannot know whether he or she likes it or not.

The user may easily acquire audition data In accordance with Japanese Unexamined Patent Application Publication No. 2002-312606. The audition music is typically part of the entire music data. Even if the user has listened to the part of the music, the user cannot definitely know whether he likes it or not as in accordance with the method disclosed in Japanese Unexamined Patent Application Publication No. 2004-54023.

A user may wish to listen to music that is currently heard by one of the user's friends beside him or her.

Preferably a user receives data of the song instead of the audition data from a terminal of a friend or a service provider and listens to the entire music on the user's own terminal.

However, the copyright law is violated if the user acquires data of music from another user and stores the music data on the user's own terminal for reproducing.

It is thus desirable to easily acquire data of a content body such as music and listen to the content body in a manner such that the copyright of the content is protected.

The scope of the invention is defined in the appended claims.

The copyright of the content is thus protected. Rather than simply listening to part of a content based on audition data recommended by another user or provided by a content distribution source, the user can fully listen to the content body.

When two friends are together with one next to the other, they can share and listen to the same music by transmitting music data from one to the other so that they enjoy the same music.

In accordance with embodiments of the present invention, a transmitting terminal can transmit music data to a receiving and reproducing terminal when a user carrying the receiving and reproducing terminal enters a music shop with the transmitting terminal installed therewithin or approaches a street corner with the transmitting terminal installed thereat. The user can thus enjoy the music in the shop or at the street corner.

In accordance with embodiments of the present invention, the user can easily obtain and listen to the content data of a song while the copyright of the content is protected.

### BRIEF DESCRIPTION OF THE DRAWINGS

Fig. 1 is an example of communication system in accordance with one embodiment of the present invention;
Fig. 2 illustrates a receiving and reproducing terminal in accordance with one embodiment of the present invention;
Fig. 3 illustrates a construction of a network;
Figs. 4A and 4B illustrate a communication process performed by each terminal;
Fig. 5 illustrates a reproducing process of a received song;
Figs. 6A-6E illustrate one of a limitation process and an inhibition process to the reproduction of the song;
Fig. 7 illustrates a reproducing process of a received song;
Fig. 8 illustrates a reproducing process of a received song;
Figs. 9A-9C illustrate one of a limitation process and an inhibition process to the reproduction of video;
Figs. 10A and 10B illustrate a limitation process on the reproduction of video; and
Figs. 11A-11C illustrate a limitation process to the reproduction of the content as a gaming content.

### DESCRIPTION OF THE PREFERRED EMBODIMENTS

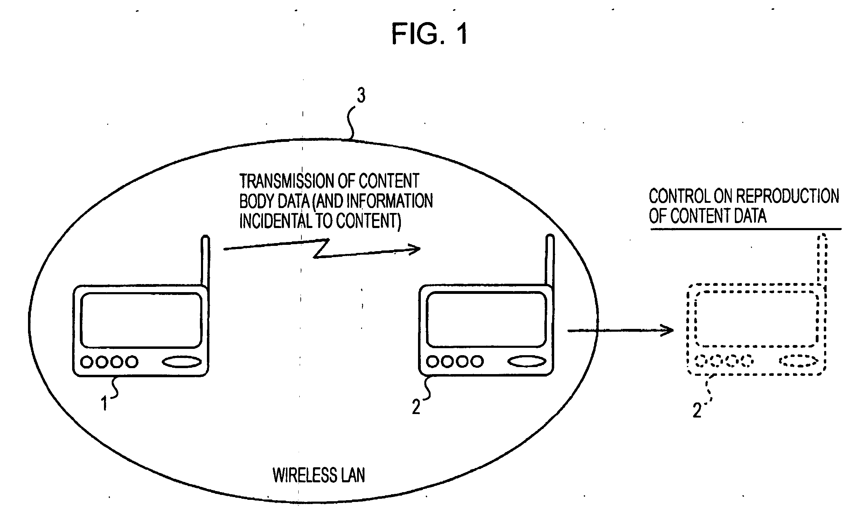

Fig. 1 illustrates an example of communication system in accordance with one embodiment of the present invention.

The communication system includes a transmitting terminal 1 and a receiving and reproducing terminal 2.

The transmitting terminal 1 is held by a user B different a user A who holds the receiving and reproducing terminal 2. The transmitting terminal 1 may be one of a wireless terminal and a mobile wireless terminal. As will be described later, as the receiving and reproducing terminal 2, the transmitting terminal 1 performs adhoc wireless communication directly with another mobile wireless terminal if a distance to the other mobile wireless terminal is within a content range, thereby exchanging information with each other. The transmitting terminal 1 transmits and receives information to and from an external apparatus via a network using infrastructure wireless communication. Such a communication system is hereinafter referred to as an inter-user system.

As another example, the transmitting terminal 1 is installed at a fixed spot such as in a music shop or at a street corner by a service provider X. In this case, the transmitting terminal 1 can not only transmit information but also receive information. In this case, the transmitting terminal 1 has a basic function of transmitting content data of a content and information incidental to the content to the receiving and reproducing terminal 2. Such a communication system is hereinafter referred to as a service system.

When the receiving and reproducing terminal 2 comes into a coverage area of the receiving and reproducing terminal 2 in each of the inter-user system and the service system, a wireless local-area network (LAN) 3 is established between the transmitting terminal 1 and the receiving and reproducing terminal 2. The transmitting terminal 1 transmits content body data or content body data and information incidental thereto to the receiving and reproducing terminal 2. Conversely, when the transmitting terminal 1 comes into a coverage area of the receiving and reproducing terminal 2, the transmitting terminal 1 also transmits the content body data or the content body data and the information incidental thereto to the receiving and reproducing terminal 2. The receiving and reproducing terminal 2 reproduces the content body in accordance with the transmitted content body data.

As will be described later, a reproducing permitted period is preset in the content body. The content body, such as music, video, gaming software, or the like, if still remaining within the reproduction permitted period, can be fully reproduced without any change. If the reproduction permitted period of the content body has expired, the reproduction of the content is subject to limitation or inhibition. The reproduction permitted period refers to a period of time within which the receiving and reproducing terminal 2 or the content body data received by the receiving and reproducing terminal 2 satisfies a predetermined reproducing permission condition.

The content body refers to music of a certain duration of time, music of one song, moving image of a certain duration of time, moving image of one song, still image of several frames or the like.

Content incidental information is information incidental to or related to the content body. For example, if the content body is a song, the content incidental information may include music data of the song for audition, information related to an artist of the song, playlist information containing the song, recommendation information related to the song, information related to preference of the transmitter side user B to the song, link information of the song, image information such as jacket photograph information of the song, publicity information of the service provider X related to the song, and information designating an audition portion of the song provided for audition after the expiration of the reproduction permitted period. If the content body is video, the content incidental information may include a text version of the above-described content incidental information of the music, video data, and music data.

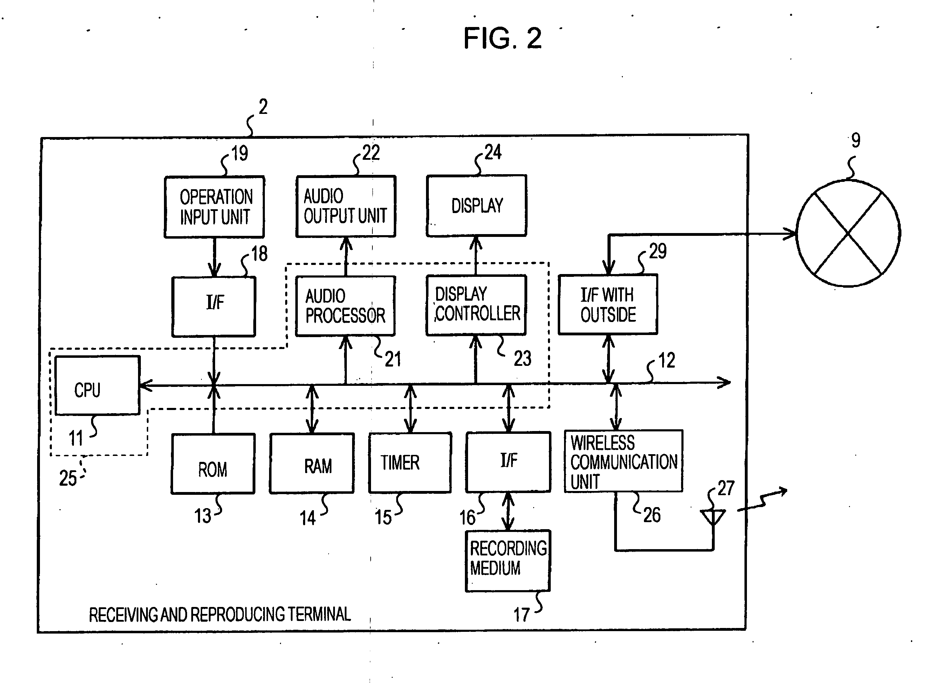

Fig. 2 illustrates the receiving and reproducing terminal 2.

The receiving and reproducing terminal 2 includes a central processing unit (CPU) 11 as control means. A bus 12 of the CPU 11 connects to a read-only memory (ROM) 13 having a program and data written thereon, a random-access memory (RAM) 14 on which the program and the data are expanded, and a timer 15.

Also connected to the bus 12 are a recording medium 17 via an interface 16, and an operation input unit 19 via an interface 18. The recording medium 17 may be a hard disk, a flash memory, or the like. The recording medium 17 stores a device identification (ID) as an identifier identifying the receiving and reproducing terminal 2, the program, content body data such as music data and video data, and the content incidental information. A user A inputs operation inputs to the receiving and reproducing terminal 2 using the operation input unit 19.

The bus 12 also connects to an audio output unit 22 such as a loudspeaker and a headphone via an audio processor 21, and a display 24 such as a liquid-crystal display via a display controller 23. The audio output unit 22 outputs music reproduced, and voice announcement. The display 24 displays a graphic user interface (GUI) as a screen of video, operation input, setting, and presentation.

To reproduce moving image data, the CPU 11 supplies audio data to the audio processor 21, and video data to the display controller 23. The audio processor 21 and the display controller 23 then perform a reproducing operation. To reproduce a gaming application, the CPU 11 supplies the audio data and the video data to the audio processor 21 and the display controller 23, respectively, to reproduce audio and video, and the CPU 11 performs the other remaining operation. In this specification, the CPU 11, the audio processor 21 and the display controller 23 are collectively referred to as a reproducing unit 25.

The bus 12 also connects to an antenna 27 via a wireless communication unit 26. The wireless communication unit 26 and the antenna 27 perform short-distance wireless communication that is direct communication performed within the predetermined coverage area. The bus 12 also connects to an interface 29 for wired connection with a network 9 such as the Internet.

The receiving and reproducing terminal 2 has a function as a cellular phone terminal.

If the communication system of Fig. 1 is an inter-user system, the transmitting terminal 1 has the same structure as the above-described receiving and reproducing terminal 2.

Each of the transmitting terminal 1 of the user B and the receiving and reproducing terminal 2 of the user A in the inter-user system, as a transmitting terminal, can transmit the content body data to the partner terminal while as a receiving terminal, receiving the content body data transmitted from the partner terminal for reproducing the content body.

If the communication system of Fig. 1 is a service system, the transmitting terminal 1 transmits the content body data or the content incidental information, managed by the service provider X, to the receiving and reproducing terminal 2 in the short-distance communication.

Only within the predetermined reproduction permitted period, the receiving and reproducing terminal 2 can reproduce the entire content body transmitted from the transmitting terminal 1 to the receiving and reproducing terminal 2. More specifically, the reproduction permitted period is defined as below.

In a first method, the reproduction permitted period is defined as a period of time from a reception of the content body data to a time the network becomes no more present between the transmitting terminal 1 and the receiving and reproducing terminal 2.

In the first method, the receiving and reproducing terminal 2 can reproduce all the content body data received from the transmitting terminal 1 as long as the receiving and reproducing terminal 2 remains within the predetermined coverage area of the transmitting terminal 1 subsequent to the reception of the content body data. More specifically, as long as the network remains established between the transmitting terminal 1 and the receiving and reproducing terminal 2, the receiving and reproducing terminal 2 can reproduce all the content body data received from the transmitting terminal 1.

The communication system may be configured so that the receiving and reproducing terminal 2 stores the received content body data on the recording medium 17. Alternatively, the communication system may be configured so that the transmitting terminal 1 stream transmits the content body data to the receiving and reproducing terminal 2 while the receiving and reproducing terminal 2 reproduces the content body data.

To detect an establishment of the network, a detection signal may be exchanged periodically between the transmitting terminal 1 and the receiving and reproducing terminal 2. The communication system thus determines in response to the detection signal whether the network remains established between the transmitting terminal 1 and the receiving and reproducing terminal 2. More specifically, the communication system detects the strength of a received electric field of the detection signal or an error rate of the detection signal, thereby determining whether the network remains established between the transmitting terminal 1 and the receiving and reproducing terminal 2.

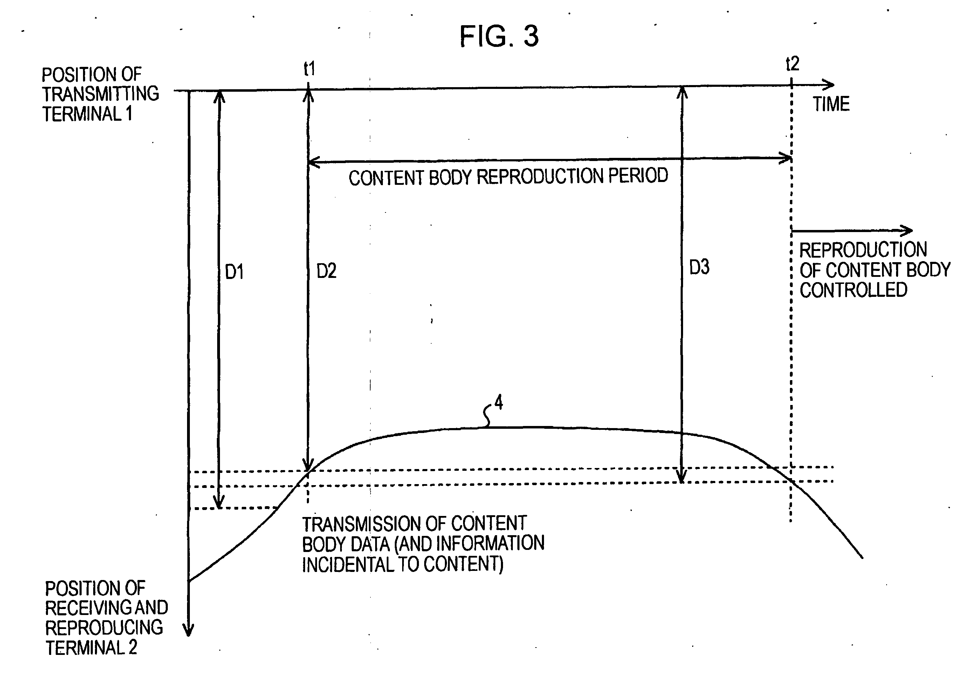

Fig. 3 illustrates an example of the first method. Curve 4 represents a change in the distance between the transmitting terminal 1 and the receiving and reproducing terminal 2 with respect to time elapse. Distance D1 represents a maximum communicable distance between the transmitting terminal 1 and the receiving and reproducing terminal 2.

At time t1, the receiving and reproducing terminal 2 approaches the transmitting terminal 1 to distance D2 which is shorter than the distance D1. The transmitting terminal 1 transmits the content body data to the receiving and reproducing terminal 2. The receiving and reproducing terminal 2 can reproduce the transmitted content body data.

At time t2, the receiving and reproducing terminal 2 is away from the transmitting terminal 1 to distance D3 that is longer than the distance D2 but shorter than the distance D1. When the receiving and reproducing terminal 2 is away from the transmitting terminal 1 as far as the distance D3, the received electric field strength of the detection signal becomes equal to or lower than a threshold value while the error rate of the detection signal becomes equal to or higher than a threshold value. In response to the detection result of the detection signal, the receiving and reproducing terminal 2 determines that the network is going to be no longer present or has been no longer present between the transmitting terminal 1 and the receiving and reproducing terminal 2, thereby limiting or inhibiting the reproduction of the content body.

If the transmitting terminal 1 instead of the receiving and reproducing terminal 2 detects the received electric field strength or the error rate, the transmitting terminal 1 transmits to the receiving and reproducing terminal 2 a signal limiting or inhibiting the reproduction of the content body when the network has been no longer established between the transmitting terminal 1 and the receiving and reproducing terminal 2. Upon receiving that signal, the receiving and reproducing terminal 2 limits or inhibits the reproduction of the content body using the CPU 11.

When the communication between the transmitting terminal 1 and the receiving and reproducing terminal 2 is interrupted in response to an operation of the user A for the receiving and reproducing terminal 2 or an operation of the user B for the transmitting terminal 1 in the inter-user system, the reproduction permitted period is determined to expire even if the receiving and reproducing terminal 2 is within the coverage area of the transmitting terminal 1.

A variety of methods are contemplated to inhibit the reproduction of the content body subsequent to the expiration of the reproduction permitted period. For example, the content body data may be already stored on the recording medium 17. The receiving and reproducing terminal 2 deletes the content body data from the recording medium 17 when the network is no longer present between the transmitting terminal 1 and the receiving and reproducing terminal 2, including when communication between the transmitting terminal 1 and the receiving and reproducing terminal 2 is interrupted.

The receiving and reproducing terminal 2 may continuously store the content body data on the recording medium 17 without deleting the content body data. In such a case, the receiving and reproducing terminal 2 can reproduce the same content body data without the transmitting terminal 1 transmitting the content body data to the receiving and reproducing terminal 2, for example, when the receiving and reproducing terminal 2 approaches again the transmitting terminal 1 after going far away from the transmitting terminal 1, or when communication is established again between the transmitting terminal 1 and the receiving and reproducing terminal 2 after a communication interruption between the transmitting terminal 1 and the receiving and reproducing terminal 2.

In a second method, the reproduction permitted period is defined as a period of time that has elapsed since the reception of the content body data.

Whether the network has been established between the transmitting terminal 1 and the receiving and reproducing terminal 2 is not a criterion in the reproduction permitted period in the second method. For example, the receiving and reproducing terminal 2 can reproduce all the content body data received from the transmitting terminal 1 for 3 hours after the reception of the content body data. The reproduction of the content body data is limited or inhibited when 3 hours has elapsed since the reception of the content body data.

A predetermined period of time, such as 3 hours, may be set in the timer 15 in the receiving and reproducing terminal 2. Upon receiving the content body data, the CPU 11 in the receiving and reproducing terminal 2 sets the predetermined period of time in the timer 15. Monitoring the time-out of the timer 15, the CPU 11 determines whether the predetermined period of time, such as 3 hours, has elapsed.

The receiving and reproducing terminal 2 stores the received content body data on the recording medium 17. To inhibit the reproduction of the content body data after the expiration of the reproduction permitted period, the receiving and reproducing terminal 2 deletes the content body data when the predetermined period of time has elapsed.

In a third method, the reproduction permitted period is defined as a period of time that has elapsed since the network was not longer present between the transmitting terminal 1 and the receiving and reproducing terminal 2 after the reception of the content body data.

The reproduction permitted period is a period of time during which the network is continuously established between the transmitting terminal 1 and the receiving and reproducing terminal 2 after the reception of the content body data, and a period of time, for example, 1 hour that has elapsed since the network was no longer present between the transmitting terminal 1 and the receiving and reproducing terminal 2.

The technique described with reference to the first method is available to determine whether the network is established between the transmitting terminal 1 and the receiving and reproducing terminal 2.

The predetermined time, such as 1 hour, may be set in the timer 15 in the receiving and reproducing terminal 2. The CPU 11 in the receiving and reproducing terminal 2 sets the predetermined period of time in the timer 15 at the moment the network is no longer present between the transmitting terminal 1 and the receiving and reproducing terminal 2. Depending on whether the timer 15 reaches the time-out, the receiving and reproducing terminal 2 determines whether the predetermined period of time, for example, 1 hour has elapsed.

In a fourth method, the reproduction permitted period is defined as a period of time during which the transmitting terminal 1 has reproduced the content body by a predetermined number of reproductions since the reception of the content body data.

The receiving and reproducing terminal 2 can reproduce all the content body data received from the transmitting terminal 1 until the content body has been reproduced by five times since the reception of the content body data. On the sixth reproduction and subsequent reproductions, the receiving and reproducing terminal 2 limits or inhibits the reproduction of the content body.

In a fifth method, other than the first through fourth methods, the reproduction permitted period is a period of time during which the network is continuously established between the transmitting terminal 1 and the receiving and reproducing terminal 2 after the reception of the content body data, and a period of time during which the receiving and reproducing terminal 2 has reproduced the content body by a predetermined number of reproductions since the network was no longer present between the transmitting terminal 1 and the receiving and reproducing terminal 2.

In each of the first through fifth methods, the transmitting terminal 1 and the receiving and reproducing terminal 2 find each other in the communication system of Fig. 1 when the receiving and reproducing terminal 2 enters into the predetermined coverage area of the transmitting terminal 1. After determining whether to transmit the content body data, the transmitting terminal 1 may transmit the content body data or the content body data together with the content incidental information to the transmitting terminal 1.

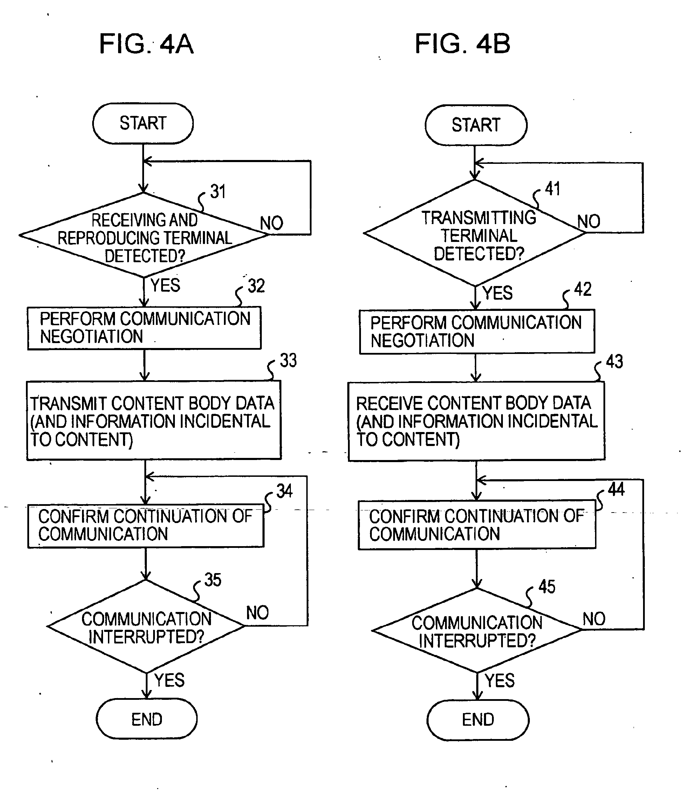

Fig. 4 illustrates a communication process performed between the transmitting terminal 1 and the receiving and reproducing terminal 2.

The transmitting terminal 1 and the receiving and reproducing terminal 2 are now switched on in the communication process. In step 31, the transmitting terminal 1 searches for the receiving and reproducing terminal 2 as a partner terminal, and determines whether the receiving and reproducing terminal 2 is detected. In step 41, the receiving and reproducing terminal 2 also searches for the transmitting terminal 1 as a partner terminal and determines whether the transmitting terminal 1 is detected.

When the receiving and reproducing terminal 2 enters into the coverage area of the transmitting terminal 1, the transmitting terminal 1 detects the receiving and reproducing terminal 2 while the receiving and reproducing terminal 2 detects the transmitting terminal 1. When the two terminals detect each other, the transmitting terminal 1 proceeds to step 32, and the receiving and reproducing terminal 2 processing proceeds to step 42. In step 32 and 42, the transmitting terminal 1 and the receiving and reproducing terminal 2 perform respective communication negotiation processes.

More specifically, in the inter-user system, the transmitting terminal 1 transmits a message such as the one telling "Would you like to listen to a new song titled 'We are the sun' sung by 'Taro "' in response to an operation of one of the user A and the user B or in response to preset setting. In reply, the receiving and reproducing terminal 2 transmits a message such as the one "Let me listen to the song" to the transmitting terminal 1. In the case of the service system, the transmitting terminal 1 transmits a message such as the one telling "We are introducing to you a new song titled 'We are the sun' sung by 'Taro "' to the receiving and reproducing terminal 2.

Subsequent to the communication negotiation process in s.tep 32, the transmitting terminal 1 proceeds to step 33. In step 33, the transmitting terminal 1 transmits to the receiving and reproducing terminal 2 the content body data or the content body data together with the content incidental information thereof. Subsequent to the c'ommunication negotiation in step 42, the receiving and reproducing terminal 2 proceeds to step 43. In step 43, the receiving and reproducing terminal 2 receives from the transmitting terminal 1 the content body data or the content body data together with the content incidental information thereof.

In step 34, the transmitting terminal 1 confirms continuation of communication. In step 35, the transmitting terminal 1 determines whether communication is interrupted. If it is determined in step 35 that the communication is not interrupted, processing returns to step 34. If it is determined in step 35 that the communication is interrupted, the transmitting terminal 1 terminates the communication with the receiving and reproducing terminal 2.

In step 44, the receiving and reproducing terminal 2 confirms continuation of communication. In step 45, the receiving and reproducing terminal 2 determines whether communication is interrupted. If it is determined in step 45 that the communication is not interrupted, processing returns to step 44. If it is determined in step 45 that the communication is interrupted, the receiving and reproducing terminal 2 terminates the communication with the transmitting terminal 1.

When the reproduction permitted period defined in the second method is used, the CPU 11 in the receiving and reproducing terminal 2 sets the reproduction permitted period to the timer 15 at the moment the content body data is received in step 43.

When the reproduction permitted period defined in the third method is used, the CPU 11 in the receiving and reproducing terminal 2 sets the reproduction permitted period to the timer 15 at the moment the network is no longer present between the transmitting terminal 1 and the receiving and reproducing terminal 2 or at the moment it is determined in step 45 that the communication is interrupted.

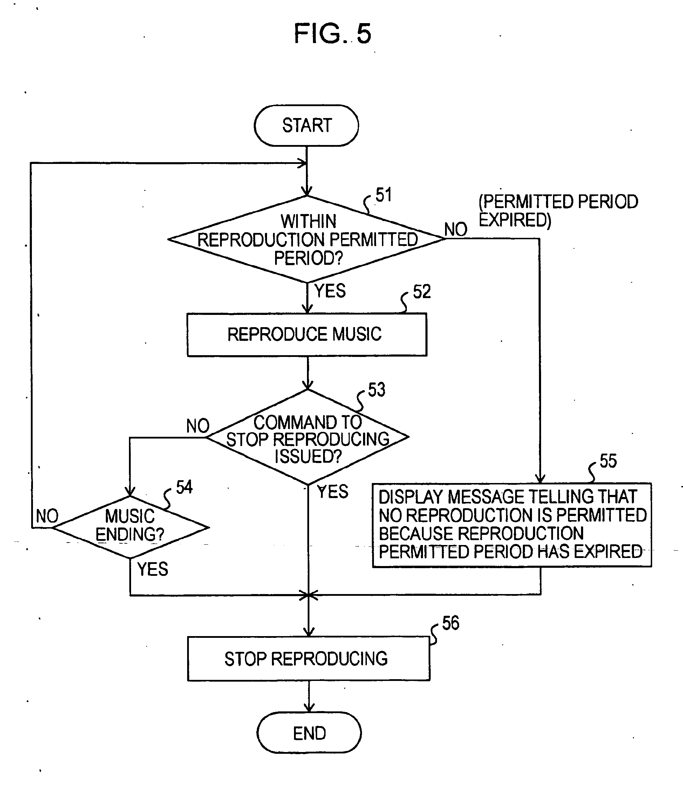

Fig. 5 illustrates a reproducing process preformed by the receiving and reproducing terminal 2 after the reception of the content body data. In this case, the content body is music or music data.

This received music reproducing process starts in response to a reproduction command from the user A. In step 51, the receiving and reproducing terminal 2 determines whether the content body data is within the reproduction permitted period. Whether the content body data is within the reproduction permitted period is determined based on one of the first through fifth methods.

If the music data is stream transmitted, the reproducing process is started in response to the determination of the CPU 11 rather than the command of the user A.

If it is determined in step 51 that the content body data is within the reproduction permitted period, processing proceeds from step 51 to step 52. In step 52, the receiving and reproducing terminal 2 reproduces the music. The receiving and reproducing terminal 2 then proceeds to step 53. In step 53, the receiving and reproducing terminal 2 determines whether the user A has issued a command to stop reproducing. If it is determined in step 53 that no command to stop reproducing has not been issued, processing proceeds to step 54. In step 54, the receiving and reproducing terminal 2 determines whether the music has come to an end. If it is determined in step 54 that the music has not come to an end, processing returns to step 51, and if the content body data is within the reproduction permitted period, the reproduction of the music continues. When the music has come to an end, processing proceeds to step 56.

If it is determined in step 53 that the command to stop reproducing has been issued, processing proceeds to step 56. In step 56, the receiving and reproducing terminal 2 stops reproducing the music.

If the receiving and reproducing terminal 2 determines in step 51 that the reproduction permitted period has expired, processing proceeds to step 55. In step 55, the receiving and reproducing terminal 2 displays on the display 24 a message telling that the content body data cannot be reproduced because of the expiration of the reproduction permitted period. Processing proceeds to step 56 to terminate the reproducing process.

In step 55, the receiving and reproducing terminal 2 may present, to the user A, a voice announcement telling that the reproduction cannot be performed because the reproduction permitted period of the content body data has expired.

After the expiration of the reproduction permitted period, the receiving and reproducing terminal 2 cannot reproduce the content body data in whole. However, even after the expiration of the reproduction permitted period, the receiving and reproducing terminal 2 can preferably reproduce part of the content body and the content incidental information.

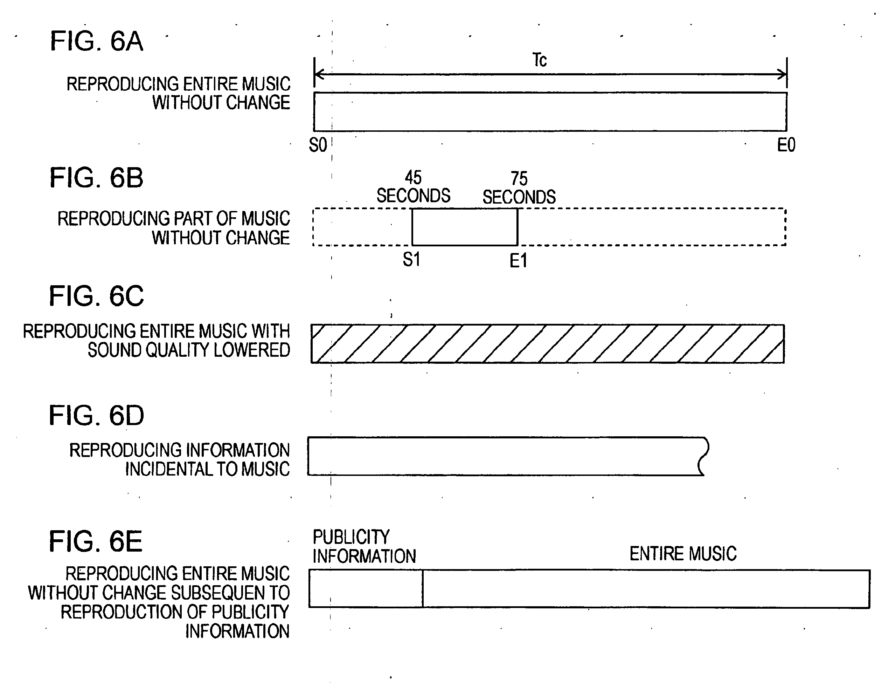

If the content body is music, the receiving and reproducing terminal 2 can reproduce entire music of one song, having a time length of Tc expanding from start point S0 to end point E0 as shown in Fig. 6A, at the original sound quality of the received music data within the reproduction permitted period.

After the expiration of the reproduction permitted period as shown in Fig. 6B, the receiving and reproducing terminal 2 reproduces part of the music at the original sound quality in a first example.

The music data supplied for audition is typically data from a 45-second point 45 seconds later from the start point to a 75-second point 75 seconds later from the start point. The part of the music reproducible is a portion of the music extending from point S1 45 seconds later from the start point of the music to point E1 75 seconds later from the start point of the music.

After the expiration of the reproduction permitted period as shown in Fig. 6C, the receiving and reproducing terminal 2 reproduces the entire music at a sound quality lower than the originally available sound quality in a second example. To lower the sound quality, the CPU 11 is set to lower a bit rate of the music data or superimpose noise onto the music data.

After the expiration of the reproduction permitted period as shown in Fig. 6D, the receiving and reproducing terminal 2 reproduces only music incidental information as the content incidental information.

For example, image information such as jacket photograph information as the music incidental information is transmitted together with the music data as the content body data from the transmitting terminal 1 to the receiving and reproducing terminal 2, and then stored onto the recording medium 17. The receiving and reproducing terminal 2 displays a corresponding image on the display 24 based on the image information.

After the expiration of the reproduction permitted period as shown in Fig. 6E, the receiving and reproducing terminal 2 reproduces the entire music of the content body after reproducing publicity information as the music incidental information in a fourth example.

Two or more of the first through fourth examples may be combined. For example, the receiving and reproducing terminal 2 may reproduce the part of the music and the music incidental information after the expiration of the reproduction permitted period.

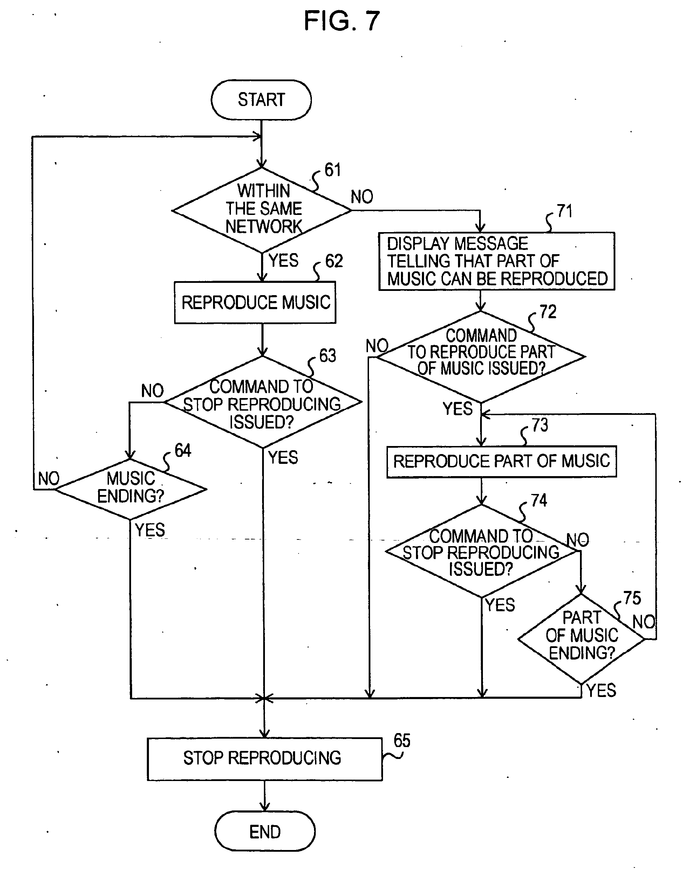

Fig. 7 illustrates a reproducing process of the receiving and reproducing terminal 2 performed after the reception of the music data when only the part of the music is reproduced after the expiration of the reproduction permitted period defined in the first method.

The reproducing process of the received music starts in response to a reproduction command from the user A. In step 61, the receiving and reproducing terminal 2 determines whether the transmitting terminal 1 and the receiving and reproducing terminal 2 are within the same network, i.e., determines whether a network has been established between the transmitting terminal 1 and the receiving and reproducing terminal 2.

If the two terminals are within the same network, processing proceeds from step 61 to step 62. In step 62, the receiving and reproducing terminal 2 reproduces the music because the content body data is within the reproduction permitted period in the music reproducing process of Fig. 5. Processing proceeds to step 63. In step 63, the receiving and reproducing terminal 2 determines whether a command to stop reproducing the music has been issued. If it is determined in step 63 that no command to stop reproducing the music has been issued, processing proceeds to step 64. In step 64, the receiving and reproducing terminal 2 determines whether the music reproduced has come to an end. If it is determined in step 64 that the music reproduced has not come to an end, processing returns to step 61. If the two terminals remain within the same network, the receiving and reproducing terminal 2 continues to reproduce the music.

If it is determined in step 63 that a command to stop reproducing the music has been issued, processing proceeds from step 63 to step 65. In step 65, the receiving and reproducing terminal 2 terminates the reproduction of the music. Also, when the music has come to an end, the receiving and reproducing terminal 2 proceeds from step 64 to step 65, thereby terminating the reproduction.

If it is determined that the network becomes no longer present between the transmitting terminal 1 and the receiving and reproducing terminal 2 and if the receiving and reproducing terminal 2 determines in step 61 that the transmitting terminal 1 and the receiving and reproducing terminal 2 are not within the same network, processing proceeds to step 71. In step 71, the receiving and reproducing terminal 2 presents, to the user A, a message on the display 24 or a voice announcement, each telling that not the entire music but part of the music is reproduced because of a non-presence of the network or a disconnection from the transmitting terminal 1, and waits for a command from the user A.

Processing proceeds to step 72. The receiving and reproducing terminal 2 determines whether a command to reproduce part of the music has been issued. If it is determined in step 72 that a command to reproduce part of the music has been issued, processing proceeds to step 73. In step 73, the receiving and reproducing terminal 2 reproduces the part of the music as shown in Fig. 6B. Processing proceeds to step 74. In step 74, the receiving and reproducing terminal 2 determines whether the user A has issued a command to stop reproducing the music. If it is determined in step 74 that no command to stop reproducing the music has been issued, processing proceeds to step 75. In step 75, the receiving and reproducing terminal 2 determines whether the reproduction of the part of the music has come to an end. If it is determined in step 75 that the reproduction of the part of the music has not come to an end, processing returns to step 73 to continuously reproduce the part of the music.

If the command to stop reproducing the music is issued, processing proceeds to step 65. In step 65, the receiving and reproducing terminal 2 terminates the reproduction of the part of the music. When the reproduction of the part of the music has come to an end, processing proceeds from step 75 to step 65. The receiving and reproducing terminal 2 then terminates the reproduction.

If it is determined in step 72 that the command to reproduce the part of the music has not been issued, processing proceeds to step 65. The receiving and reproducing terminal 2 terminates the reproduction.

If it is determined in step 61 that the two terminals are not within the same network, the transmitting terminal 1 may start reproducing the part of the music without waiting from the command from the user A.

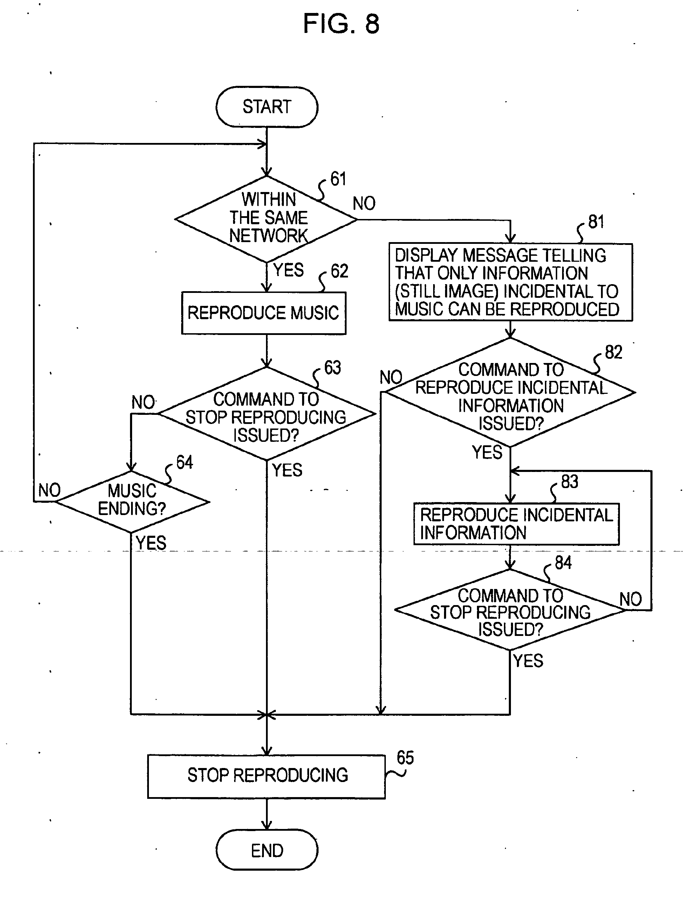

Fig. 8 illustrates a reproducing process of the receiving and reproducing terminal 2 performed after the reception of the music data when only music incidental information is reproduced after the expiration of the reproduction permitted period defined in the first method. The music incidental information may be still image data such as jacket photograph information.

The reproducing process of the received music starts in response to a reproduction command from the user A. In step 61, the receiving and reproducing terminal 2 determines whether the transmitting terminal 1 and the receiving and reproducing terminal 2 are within the same network, i.e., whether a network is established between the transmitting terminal 1 and the receiving and reproducing terminal 2.

If the transmitting terminal 1 and the receiving and reproducing terminal 2 are within the same network, step 62, 63, 64, and 65 remain unchanged from those of Fig. 7.

Processing proceeds to step 81 if the network has become no longer present between the transmitting terminal 1 and the receiving and reproducing terminal 2, and if the receiving and reproducing terminal 2 determines in step 61 that the receiving and reproducing terminal 2 is within the same network. In step 81, the receiving and reproducing terminal 2 presents, to the user A, a message on the display 24 or a voice announcement, each telling that not the music but the still image of the music incident information is reproduced because of a non-presence of the network or a disconnection from the transmitting terminal 1, and waits for a command from the user A.

Processing proceeds from step 81 to step 82. In step 82, the receiving and reproducing terminal 2 determines whether a command to reproduce the music incidental information as the still image has been issued. If it is determined in step 82 that a command to reproduce the music incident information as the still image has been issued, processing proceeds to step 83. In step 83, the receiving and reproducing terminal 2 reproduces the music incidental information such as the still image. Processing proceeds from step 83 to step 84. In step 84, the receiving and reproducing terminal 2 determines whether the user A has issued a command to stop reproducing. If it is determined in step 84 that no command to stop reproducing has been issued, processing returns to step 83 to continuously reproduce the music incidental information such as the still image.

When the command to stop reproducing has been issued, processing proceeds from step 84 to step 65. In step 65, the receiving and reproducing terminal 2 terminates the reproduction of the music as the content. If it is determined in step 82 that no command to reproduce the music incidental information such as the still image has been issued, the receiving and reproducing terminal 2 proceeds to step 65 to terminate the reproduction.

If it is determined in step 61 that the transmitting terminal 1 and the receiving and reproducing terminal 2 are not within the same network, the receiving and reproducing terminal 2 may reproduce the music incidental information such as the still image without waiting for the command from the user A.

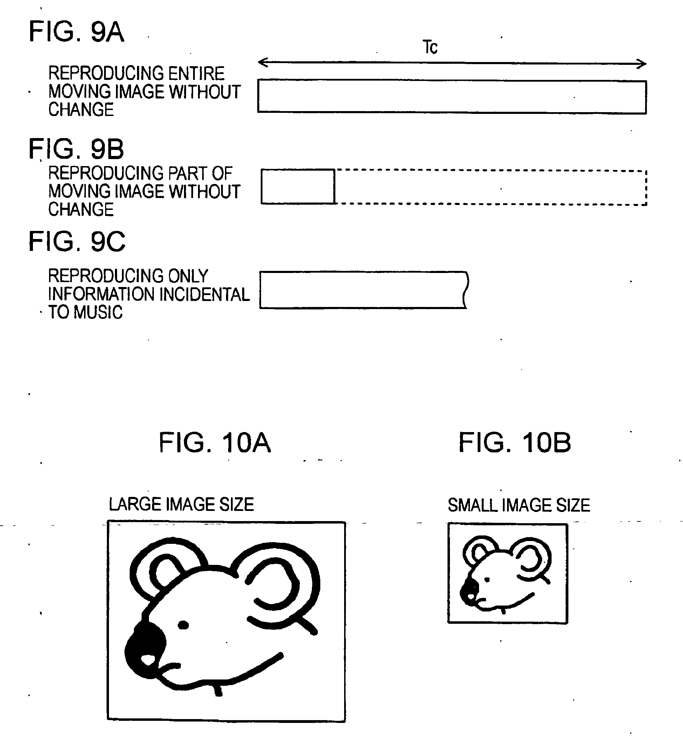

If the content body is a moving image with the reproduction permitted period unexpired, the receiving and reproducing terminal 2 can reproduce the entire moving image having a time length of Tc at the originally available image quality of the received video data as shown in Fig. 9A.

When the reproduction permitted period expires, the receiving and reproducing terminal 2 may reproduce only part of the moving image at the originally available image quality as shown in Fig. 9B.

In another example, the receiving and reproducing terminal 2 may reproduce only video incidental information as the content incidental information as shown in Fig. 9C when the reproduction permitted period expires.

The receiving and reproducing terminal 2 reproduces a moving image or a still image, as the content body, at an image quality lower than the originally available image quality when the reproduction permitted period expires.

If an image size is relatively large as shown in Fig. 10A, the receiving and reproducing terminal 2 contracts the image both vertically and horizontally by a ratio of 1/2 as shown in Fig. 10B for reproduction.

Methods available for degrading image quality include increasing a compression rate of the image data, reducing contrast or brightness of the image, superimposing noise on the image, etc.

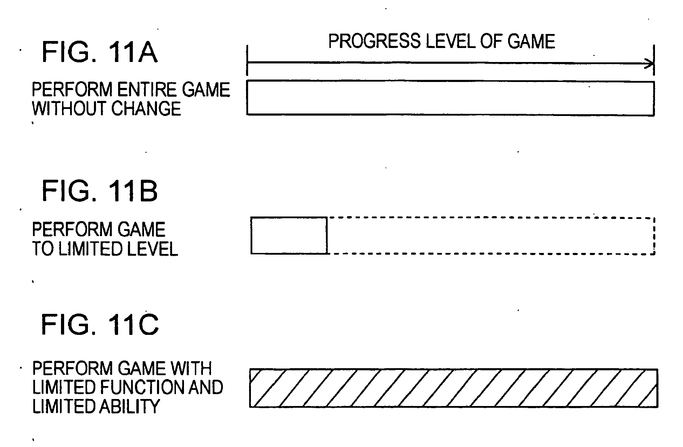

If the content body is a gaming content, the receiving and reproducing terminal 2 reproduces an entire game without any limitation on the game as shown in Fig. 11A when the reproduction permitted period is unexpired.

The receiving and reproducing terminal 2 may perform the game to a predetermined progress level as shown in Fig. 11B when the reproduction permitted period expires.

In another example, the receiving and reproducing terminal 2 may reproduce the game with function and ability of objects to reproduce with, such as characters and vehicles, acting in the game limited as shown in Fig. 11C when the reproduction permitted period expires. For example, the limiting of the objects to reproduce with includes limiting the number of weapons available to characters in a role-playing game type application, or limiting the speed and course of a vehicle in a car-race game type application.

Each of the transmitting terminal 1 and the receiving and reproducing terminal 2 may constitute a wireless LAN. When the transmitting terminal 1 and the receiving and reproducing terminal 2 construct a wired LAN, the present invention is applicable to such a wired LAN.

The transmitting terminal 1 transmits the content body data to the receiving and reproducing terminal 2 when the transmitting terminal 1 and the receiving and reproducing terminal 2 are linked to the same network. The receiving and reproducing terminal 2 receives the content body data and reproduces the content body within the reproduction permitted period. The reproduction permitted period is defined by one of the five methods described above.

The transmitting terminal 1 may be designed to transmit the content body data to the receiving and reproducing terminal 2 by any number of times. The transmitting terminal 1 may store a history of data transmission to the receiving and reproducing terminal 2 to which the content body data has been transmitted. The transmitting terminal 1 may then prevent content body data from being transmitted to the receiving and reproducing terminal 2 if the same content body data has already been transmitted to the receiving and reproducing terminal 2. The transmitting terminal 1 stores, as data, the history of the receiving and reproducing terminal 2 to which the content body data has been transmitted. When the transmitting terminal 1 transmits any content body data to the receiving and reproducing terminal 2, the transmitting terminal 1 references the history, and inhibits the transmission of the content body data if the same content body data has already been transmitted to the receiving and reproducing terminal 2. On the other hand, the receiving and reproducing terminal 2 stores, as data, a history of the content body data received from the transmitting terminal 1. When the receiving and reproducing terminal 2 receives the content body data from the transmitting terminal 1, the receiving and reproducing terminal 2 references the history. The receiving and reproducing terminal 2 inhibits the reception of the same content body data that has already been received by the receiving and reproducing terminal 2.

The copyright of each content can thus be protected more securely by constructing the system of each of the transmitting terminal 1 and the receiving and reproducing terminal 2 so that the same content body data may not be transmitted to the same receiving and reproducing terminal 2.

The above series of process steps may be performed using software. To perform the process steps, a program constructing the software may be installed onto a computer built in dedicated hardware or a general-purpose personal computer that performs a variety of processes. The program may be installed to the personal computer from a recording medium or from a server via the Internet.

It should be understood by those skilled in the art that various modifications, combinations, sub-combinations and alterations may occur depending on design requirements and other factors insofar as they are within the scope of the appended claims.

## Claims

1. A method of receiving and reproducing a content on a receiving and reproducing terminal (2), the method comprising steps of:
establishing a network with a transmitting terminal (1) and receiving content data of a content transmitted from the transmitting terminal (1);
determining whether a predetermined reproducing permission condition is satisfied; and
controlling reproduction to limit or inhibit the reproduction of the content data on the receiving and reproducing terminal (2) if the determination result in the determining step shows that the predetermined reproducing permission condition is not satisfied, wherein:
the transmitting terminal (1) and the receiving and reproducing terminal (2) respectively include a wireless terminal and a wireless mobile terminal (26,27) that periodically exchange a detection signal with each other to periodically detect whether the network remains established; and
the reproducing permission condition is that the network remains established, as detected by said periodic exchange of said detection signal, between the transmitting terminal (1) and the receiving and reproducing terminal (2) after the receiving and reproducing terminal (2) has received the body of the content data, or the reproducing permission condition is that a period of time that has elapsed since the network ceased to be established, as detected by said periodic exchange of said detection signal, between the transmitting terminal (1) and the receiving and reproducing terminal (2) after the reception of the content data by the receiving and reproducing terminal (2) is within a predetermined period of time, **characterized in that**:
the receiving and reproducing terminal (2) reproduces the content at a reproduction quality standard lower than the originally available reproduction quality standard if the reproducing permission condition is not satisfied.

2. The method of claim 1, wherein detection of whether the network remains established is carried out by detecting the strength of a received electric field of the detection signal or an error rate of the detection signal.

3. The method according to claim 1, wherein the transmitting terminal (1) includes a wireless terminal at a fixed spot and the receiving and reproducing terminal (2) includes a mobile wireless terminal (26, 27).

4. A method according to any one of the preceding claims, wherein the receiving and reproducing terminal (2) reproduces a predetermined portion of the content if the reproducing permission condition is not satisfied.

5. A method according to any one of the preceding claims, wherein information incidental to the content is reproduced if the reproducing permission condition is not satisfied, the incidental information being transmitted together with the content data from the transmitting terminal (1) in the transmitting step.

6. A receiving and reproducing terminal (2) comprising:
communication means (26, 27, 29) for receiving content data of a content transmitted from a transmitting terminal (1) in a state that a network is established between the transmitting terminal (1) and the receiving and reproducing terminal (2);
reproducing means (22) for reproducing the content based on the content data; and
control means (11) for determining in response to a command to reproduce the content whether a predetermined reproducing permission condition is satisfied, and limiting or inhibiting the reproduction of the content by the reproducing means (22) based on the determination result, wherein:
the receiving and reproducing terminal (2) further includes a wireless mobile terminal (26, 27) configured periodically to exchange a detection signal with a wireless terminal of the transmitting terminal (1) to periodically detect whether the network remains established; and
the reproducing permission condition is that the network remains established, as detected by said periodic exchange of said detection signal, between the transmitting terminal (1) and the receiving and reproducing terminal (2) after the receiving and reproducing terminal (2) has received the body of the content data, or the reproducing permission condition is that a period of time that has elapsed since the network ceased to be established, as detected by said periodic exchange of said detection signal, between the transmitting terminal (1) and the receiving and reproducing terminal (2) after the reception of the content data by the receiving and reproducing terminal (2) is within a predetermined period of time, **characterized in that**:
the control means (11) is configured to cause the reproducing means (22) to reproduce the content at a reproduction quality standard lower than the originally available reproduction quality standard if the reproducing permission condition is not satisfied.

7. The receiving and reproducing terminal according to claim 6, configured so that detection of whether the network remains established is carried out by detecting the strength of a received electric field of the detection signal or an error rate of the detection signal.

8. The receiving and reproducing terminal (2) according to claim 6, wherein the transmitting terminal (1) includes a wireless terminal at a fixed spot and the receiving and reproducing terminal (2) includes a mobile wireless terminal (26, 27).

9. A receiving and reproducing terminal (2) according to any one of claims 6 to 8, wherein the control means (11) is configured to cause the reproducing means (22) to reproduce a predetermined portion of the content if the reproducing permission condition is not satisfied.

10. A receiving and reproducing terminal (2) according to any one of claims 6 to 9, wherein the control means (11) is configured to cause the reproducing means (22) to reproduce information incidental to the content if the reproducing permission condition is not satisfied, the incidental information being transmitted together with the content data to the reproducing means (22) from the transmitting terminal (1).

11. A recording medium having stored thereon a computer readable program for causing a computer to perform the steps of the method defined in claim 1.

## Patentansprüche

1. Verfahren zum Empfangen und Wiedergeben eines Inhalts auf einem Empfangs- und Wiedergabeendgerät (2), wobei das Verfahren folgende Schritte umfasst:
Einrichten eines Netzwerks mit einem Übertragungsendgerät (1) und Empfangen von Inhaltsdaten eines Inhalts, der vom Übertragungsendgerät (1) übertragen werden;
Bestimmen, ob ein vorher festgelegter Wiedergabezulassungszustand erfüllt ist; und
Steuern von Wiedergabe, um die Wiedergabe der Inhaltsdaten auf dem Empfangs- und Wiedergabeendgerät (2) zu beschränken oder zu verbieten, wenn das Bestimmungsergebnis im Bestimmungsschritt zeigt, dass der vorher festgelegte Wiedergabezulassungszustand nicht erfüllt ist, wobei:
das Übertragungsendgerät (1) bzw. das Empfangs- und Wiedergabeendgerät (2) ein drahtloses Endgerät und ein drahtloses mobiles Endgerät (26, 27) aufweisen, welche periodisch ein Erfassungssignal miteinander austauschen, um periodisch zu erfassen, ob das Netzwerk eingerichtet verbleibt; und
die Wiedergabezulassungsbedingung derart ist, dass das Netzwerk wie durch den periodischen Austausch des Erfassungssignals erfasst zwischen dem Übertragungsendgerät (1) und dem Empfangs- und Wiedergabeendgerät (2) eingerichtet verbleibt, nachdem das Empfangs- und Wiedergabeendgerät (2) den Hauptteil der Inhaltsdaten empfangen hat, oder die Wiedergabezulassungsbedingung derart ist, dass eine Zeitperiode, welche abgelaufen ist, seitdem das Netzwerk aufgehört hat, wie durch den periodischen Austausch des Erfassungssignals erfasst, zwischen dem Übertragungsendgerät (1) und dem Empfangs- und Wiedergabeendgerät (2) eingerichtet zu sein, nachdem der Empfang der Inhaltsdaten durch das Empfangs- und Wiedergabeendgerät (2) innerhalb einer vorher festgelegten Zeitperiode ist, **dadurch gekennzeichnet, dass**:
das Empfangs- und Wiedergabeendgerät (2) den Inhalt mit einem Wiedergabequalitätsstandard wiedergibt, der niedriger ist als der ursprünglich verfügbare Wiedergabequalitätsstandard, wenn der Wiedergabezulassungszustand nicht erfüllt ist.

2. Verfahren nach Anspruch 1, wobei die Erfassung davon, ob das Netzwerk eingerichtet verbleibt, durch Erfassen der Stärke eines empfangenen elektrischen Felds des Erfassungssignals oder einer Fehlerrate des Erfassungssignals ausgeführt wird.

3. Verfahren nach Anspruch 1, wobei das Übertragungsendgerät (1) ein Drahtlosendgerät bei einem festen Platz aufweist, und das Empfangs- und Wiedergabeendgerät (2) ein mobiles Drahtlosendgerät (26, 27) aufweist.

4. Verfahren nach einem der vorhergehenden Ansprüche, wobei das Empfangs- und Wiedergabeendgerät (2) einen vorher festgelegten Teil des Inhalts wiedergibt, wenn die Wiedergabezulassungsbedingung nicht erfüllt ist.

5. Verfahren nach einem der vorhergehenden Ansprüche, wobei Information, welche zu dem Inhalt gehört, wiedergegeben wird, wenn die Wiedergabezulassungsbedingung nicht erfüllt wird, wobei die dazugehörende Information zusammen mit den Inhaltsdaten vom Übertragungsendgerät (1) im Übertragungsschritt übertragen wird.

6. Empfangs- und Wiedergabeendgerät (2), welches umfasst:
eine Kommunikationseinrichtung (26, 27, 29) zum Empfangen von Inhaltsdaten eines Inhalts, der von einem Übertragungsendgerät (1) übertragen wird, in einem Zustand, dass ein Netzwerk zwischen dem Übertragungsendgerät (1) und dem Empfangs- und Wiedergabeendgerät (2) eingerichtet ist;
eine Wiedergabeeinrichtung (22) zum Wiedergeben des Inhalts auf Basis der Inhaltsdaten; und
eine Steuereinrichtung (11) zum Bestimmen als Antwort auf einen Befehl, um den Inhalt wiederzugeben, ob eine vorher festgelegter Wiedergabezulassungsbedingung erfüllt wird, und zum Begrenzen und Unterbinden der Wiedergabe des Inhalts durch die Wiedergabeeinrichtung (22) auf Basis des Bestimmungsergebnisses, wobei:
das Empfangs- und Wiedergabeendgerät (2) außerdem ein drahtlos mobiles Endgerät (26, 27) aufweist, welches konfiguriert ist, periodisch ein Erfassungssignal mit einem Drahtlosendgerät des Übertragungsendgeräts (1) auszutauschen, um periodisch zu erfassen, ob das Netzwerk eingerichtet verbleibt; und
die Wiedergabezulassungsbedingung derart ist, dass das Netzwerk eingerichtet verbleibt, wie durch den periodischen Austausch des Erfassungssignals zwischen dem Übertragungsendgerät (1) und dem Empfangs- und Wiedergabeendgerät (2) erfasst, nachdem das Empfangs- und Wiedergabeendgerät (2) den Hauptteil der Inhaltsdaten empfangen hat, oder die Wiedergabezulassungsbedingung derart ist, dass eine Zeitperiode, die abgelaufen ist, seitdem das Netzwerk aufgehört hat, wie durch den periodischen Austausch des Erfassungssignals erfasst, zwischen dem Übertragungsendgerät (1) und dem Empfangs- und Wiedergabeendgerät (2) eingerichtet zu sein, nachdem der Empfang der Inhaltsdaten durch das Empfangs- und Wiedergabeendgerät (2) innerhalb einer vorher festgelegten Zeitperiode ist, **dadurch gekennzeichnet, dass**:
die Steuereinrichtung (11) konfiguriert ist, zu veranlassen, dass die Wiedergabeeinrichtung (22) den Inhalt mit einem Wiedergabequalitätsstandard wiedergibt, der niedriger ist als der ursprünglich verfügbare Wiedergabequalitätsstandard, wenn die Wiedergabezulassungsbedingung nicht erfüllt ist.

7. Empfangs- und Wiedergabeendgerät nach Anspruch 6, welches konfiguriert ist, dass die Erfassung, ob das Netzwerk eingerichtet verbleibt, durch Erfassen der Stärke des empfangenen elektrischen Felds des Erfassungssignals oder einer Fehlerrate des Erfassungssignals ausgeführt wird.

8. Empfangs- und Wiedergabeendgerät (2) nach Anspruch 6, wobei das Übertragungsendgerät (1) ein drahtloses Endgerät bei einem festen Platz aufweist, und das Empfangs- und Wiedergabeendgerät (2) ein mobiles Drahtlosendgerät (26, 27) aufweist.

9. Empfangs- und Wiedergabeendgerät (2) nach einem der Ansprüche 6 bis 8, wobei die Steuereinrichtung (11) konfiguriert ist, zu veranlassen, dass die Wiedergabeeinrichtung (22) einen vorher festgelegten Teil des Inhalts wiedergibt, wenn die Wiedergabezulassungsbedingung nicht erfüllt ist.

10. Empfangs- und Wiedergabeendgerät (2) nach einem der Ansprüche 6 bis 9, wobei die Steuereinrichtung (11) konfiguriert ist, zu veranlassen, dass die Wiedergabeeinrichtung (22) Information wiedergibt, welche zu dem Inhalt gehört, wenn die Wiedergabezulassungsbedingung nicht erfüllt ist, wobei die dazugehörige Information zusammen mit den Inhaltsdaten zur Wiedergabeeinrichtung (22) vom Übertragungsendgerät (1) übertragen wird.

11. Aufzeichnungsmedium, auf dem ein computer-lesbares Programm gespeichert ist, um zu veranlassen, dass ein Computer die Schritte des Verfahrens durchführt, welche im Anspruch 1 definiert sind.

## Revendications

1. Procédé de réception et de reproduction de contenu sur un terminal de réception et de reproduction (2), le procédé comportant les étapes consistant à :
établir un réseau avec un terminal de transmission (1) et recevoir les données de contenu d'un contenu transmis depuis le terminal de transmission (1) ;
déterminer si une condition d'autorisation de reproduction prédéterminée est satisfaite ; et
contrôler la reproduction pour limiter ou empêcher la reproduction des données de contenu sur le terminal de réception et de reproduction (2) si le résultat de la détermination au cours de l'état de détermination montre que la condition d'autorisation de reproduction prédéterminée n'est pas satisfaite ; dans lequel :
le terminal de transmission (1) et le terminal de réception et de reproduction (2) comprennent respectivement un terminal sans fil et un terminal mobile sans fil (26, 27) qui échangent périodiquement un signal de détection l'un avec l'autre pour détecter périodiquement si le réseau est toujours établi ; et
la condition de permission de reproduction est que le réseau reste établi, tel que détecté par ledit échange périodique dudit signal de détection, entre le terminal de transmission (1) et le terminal de réception et de reproduction (2) après que le terminal de réception et de reproduction (2) a reçu le corps des données de contenu, ou la condition d'autorisation de reproduction avec une période de temps qui s'est écoulé depuis que le réseau a cessé d'être établi, tel que détecté par ledit échange périodique dudit signal de détection, entre le terminal de transmission (1) et le terminal de réception et de reproduction (2) après la réception des données de contenu par le terminal de réception et de reproduction (2) se trouve à l'intérieur d'une période de temps prédéterminée, **caractérisé en ce que**:
le terminal de réception et de reproduction (2) reproduit le contenu à un standard de qualité de reproduction inférieur au standard de qualité de reproduction disponible à l'origine si la condition d'autorisation de reproduction n'est pas satisfaite.

2. Procédé selon la revendication 1, dans lequel on effectue la détection du fait que le réseau reste ou non établi en détectant la force d'un champ électrique reçu du signal de détection ou un taux d'erreur du signal de détection.

3. Procédé selon la revendication 1, dans lequel le terminal de transmission (1) comprend un terminal sans fil à un point fixe et le terminal de réception et de reproduction (2) comprend un terminal sans fil mobile (26, 27).

4. Procédé selon l'une quelconque des revendications précédentes, dans lequel le terminal de réception et de reproduction (2) reproduit une partie prédéterminée du contenu si la condition d'autorisation de reproduction n'est pas satisfaite.

5. Procédé selon l'une quelconque des revendications précédentes, dans lequel une information indirecte par rapport au contenu est reproduite si la condition d'autorisation de reproduction n'est pas satisfaite, l'information indirecte étant transmise conjointement avec les données de contenu depuis le terminal de transmission (1) au cours de l'étape de transmission.

6. Terminal de réception et de reproduction (2) comportant :
un moyen de communication (26, 27, 29) pour recevoir des données de contenu d'un contenu transmis depuis un terminal de transmission (1) dans un état selon lequel un réseau est établi entre le terminal de transmission (1) et le terminal de réception et de reproduction (2) ;
un moyen de reproduction (22) pour reproduire le contenu en fonction des données de contenu ; et
un moyen de contrôle (11) pour déterminer, en réponse à une commande pour reproduire le contenu, si une condition d'autorisation de reproduction prédéterminée est satisfaite, et limiter ou empêcher la reproduction du contenu par le moyen de reproduction (22) en fonction du résultat de détermination, dans lequel :
le terminal de réception et de reproduction (2) comprend en outre un terminal mobile sans fil (26, 27) configuré périodiquement pour échanger un signal de détection avec un terminal sans fil du terminal de transmission (1) pour détecter périodiquement si le réseau reste établi ; et
la condition d'autorisation de reproduction est que le réseau reste établi, tel que détecté par ledit échange périodique dudit signal de détection, entre le terminal de transmission (1) et le terminal de réception et de reproduction (2) après que le terminal de réception et de reproduction (2) a reçu le corps des données de contenu, ou la condition d'autorisation de reproduction est qu'une période de temps qui s'est écoulée depuis que le réseau a cessé d'être établi, tel que détecté par ledit échange périodique dudit signal de détection, entre le terminal de transmission (1) et le terminal de réception et de reproduction (2) après la réception des données de contenu par le terminal de réception et de reproduction (2) se trouve à l'intérieur d'une période de temps prédéterminée, **caractérisé en ce que** :
le moyen de contrôle (11) est configuré pour amener le moyen de reproduction (22) à reproduire le contenu à un standard de qualité de reproduction inférieur au standard de qualité de reproduction disponible à l'origine si la condition d'autorisation de reproduction n'est pas satisfaite.

7. Terminal de réception et de reproduction selon la revendication 6, configuré de sorte que l'on effectue une détection si le réseau reste établi en détectant la force d'un champ électrique reçu du signal de détection ou un taux d'erreur du signal de détection.

8. Terminal de réception et de reproduction (2) selon la revendication 6, dans lequel le terminal de transmission (1) comprend un terminal sans fil en un point fixe et le terminal de réception et de reproduction (2) comprend un terminal sans fil mobile (26, 27).

9. Terminal de réception et de reproduction (2) selon l'une quelconque des revendications 6 à 8, dans lequel le moyen de contrôle (11) est configuré pour amener le moyen de reproduction (22) à reproduire une partie prédéterminée du contenu si la condition d'autorisation de reproduction n'est pas satisfaite.

10. Terminal de réception et de reproduction (2) selon l'une quelconque des revendications 6 à 9, dans lequel le moyen de contrôle (11) est configuré pour amener le moyen de reproduction (22) à reproduire une information indirecte au contenu si la condition d'autorisation de reproduction n'est pas satisfaite, l'information indirecte étant transmise conjointement avec les données de contenu au moyen de reproduction (22) depuis le terminal de transmission (1).

11. Support d'enregistrement comportant un programme pouvant être lu par un ordinateur pour amener un ordinateur à exécuter les étapes du procédé défini dans la revendication 1.
